Europäisches Patentamt

(19) European Patent Office

Office européen des brevets

(11) **EP 0 585 514 B1**

(12) **EUROPEAN PATENT SPECIFICATION**

(45) Date of publication and mention
of the grant of the patent:
**07.10.1998 Bulletin 1998/41**

(51) Int. Cl.$^6$: **A23K 1/17**

(21) Application number: **93100072.3**

(22) Date of filing: **05.01.1993**

(54) **Animal feed and an additive thereto or to drinking water containing an antibiotic mixture of gentamicin with lincomycin or clindamycin**

Tierfutter, Futterzusatz oder Trinkwasser, die eine antibiotischen Mischung von Gentamicin mit Lincomycin oder Clindamycin enthalten

Nourriture pour animaux, additif alimentaire ou eau potable contenant un mélange antibiotique de gentamicine avec lincomycine ou clindamycine

(84) Designated Contracting States:
**AT DE FR GB IT NL**

(30) Priority: **09.01.1992 SI 9200002**

(43) Date of publication of application:
**09.03.1994 Bulletin 1994/10**

(73) Proprietor:
**LEK, tovarna farmacevtskih in kemicnih izdelkov, d.d., Ljubljana
SI-61107 Ljubljana (SI)**

(72) Inventor: **Sever, Bojan
SI-61210 Ljubljana-Sentvid (SI)**

(74) Representative:
**Müller-Boré & Partner
Patentanwälte
Grafinger Strasse 2
81671 München (DE)**

(56) References cited:
**EP-A- 26 746         EP-A- 32 304
WO-A-85/00515    GB-A- 2 159 409
US-A- 3 261 687**

• **BRITISH POULTRY SCIENCE vol. 18, no. 3, 1977, GB pages 283 - 294 J. BUNYAN ET AL. 'Antimicrobial substances and chick growth promotion: the growth-promoting activities of antimicrobial substances, including fifty-two used either in therapy or as dietary additives'**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Xerox (UK) Business Services
2.16.3/3.4

**Description**

The present invention belongs to the field of veterinary medicine and relates to an additive to animal feed or to animal's drinking water containing an antibiotic mixture of gentamicin with lincomycin, which can be in the form of free bases but preferably in the form of pharmacologically acceptable acid addition salts thereof, and animal feed thereof for the use in the prophylaxis and therapy of infections and hence for increasing the gain in body weight of fattening animals and for improving the efficiency factor in fattening animals.

There exists a constant need for an effective prophylaxis and therapy of infections and, consequently, for an increase of the gain in body weight in fattening animals such as poultry, calves, pigs, lambs. For that purpose antibiotics and combinations thereof as additives to animal feed or to drinking water, which lead to the desired aim, are looked for.

Lincomycin is a well-known antibiotic described in US Patent 3,086,912, which inhibits the growth and the propagation of numerous microorganisms, particularly of gram-positive bacteria. In US Patent 3,155,580 galenic forms based on lincomycin and acid addition salts thereof as the active ingredient for the treatment of infections caused by bacteria in humans and animals are described. In fattening animals the antibiotic can be used prophylactically and for the gain in body weight as a stimulator of growth. Lincomycin hydrochloride can be added to the usual animal feed in dose units.

From US Patent 3,150,042 the use of lincomycin for prophylactic and therapeutic treatment of coccidiosis in animals using the antibiotic as an additive to the usual feed or to a suitable amount of drinking water. There is also described the use of tablets and sterile injection solutions.

Clindamycin is the generic name for 7(S)-chloro-7-deoxy-lincomycin, which is described in US Patents 3,475,407, 3,496,163, 3,509,127 and 3,539,689 as a base or as acid addition salts thereof, which is used in oral or parenteral galenic forms for treating humans and animals infected with bacteria, coccidia and Mycoplasma.

Therapeutic forms of clindamycin are used similarly as those of lincomycin, only that clindamycin is also active against Plasmodia and more active against infections with bacteria. It is also used prophylactically as an additive to the feed in fattening cattle.

Gentamicin is an antibiotic described in US Patents 3,091,572 and 3,136,704 and consists of three structurally related components, gentamicins $C_1$, $C_2$, and $C_{1a}$. Gentamicin A is also known, which is diferent from the other components of the complex. In galenic forms gentamicin occurs in the form of sulfate (gentamicin sulfate). Gentamicin is a very effective antibiotic against gram-positive and gram-negative microorganisms such as species Staphylococcus, Klebsiella, Pneunomonas and Proteus, and is used both in human and veterinary medicine.

In the US Patent 3,261,687 there is described an animal feed and a process for increasing the gain in the body weight in healthy fattening animals in a ratio of 1 to 10 parts by weight of spectinomycin and 1 part by weight of lincomycin in the animal feed composition. It is reported that with a such combination of antibiotics in animal feed or drinking water unexpectedly good results in the increase in the gain in body weight and in the rate thereof as well as in the increase of the efficiency factor were obtained. At the same tune the combination of both antibiotics in animal feed acts synergistically and is also suitable for therapeutic and prophylactic treatment of poultry, pigs, sheep and cattle.

EP-A-0 026 746 describes a pharmaceutical preparation and a process for increasing the antibiotic efficiency of antibiotics, which are based on the combination of one or more antibiotics and muramylpeptide of the formula I. Particularly muramylpeptides of the formula II can be used. Among the numerous cited possible antibiotics, gentamicin as an aminoglycosidic antibiotic and lincomycin or clindamiycin as a lincomycinic antibiotic can be used. The examples demonstrate the use of only one antibiotic in the combination with muramylpeptides and necessarily muramylpeptides must always be used in combination with an antibiotic.

GB-A-2 159 409 describes a synergistic antibiotic combination useful for the treatment of respiratory, gastrointestinal as well as urinary infections and septicaemia of domestic animals, comprising tiamulin hydrogen fumarate and an aminoglycosidic antibiotic such, as gentamicin or pharmaceutically acceptable salts thereof in a mass ratio of from 1:5 to 5:1. Example 5 shows a combination of tiamulin and gentamicin in a mass ratio of 4:1. The lincomycin antibiotics used in addition to gentamicin in the present application are structurally entirely different from tiamulin.

WO-A-8 500 515 describes *inter alia* the antimicrobial agents gentamycin and clindamycin coencapsulated in one liposome preparation for the treatment of anaerobic infections, wherein this liposome preparation is applied intraperitoneal.

The present invention is based on the task to find an efficient combination of antibiotics as additives to animal feed or drinking water for animals such as poultry, pigs, calves and lambs, which would be effective in the prophylaxis and therapy of infections and, consequently, which would be a quick way for increasing the gain in body weight in fattening animals and which would raise the efficiency factor at low conversion of the food. The results obtained by the new combination of antibiotics as an additive to animal feed or drinking water should be superior to the ones obtained by using individual antibiotics or some known combinations of antibiotics for the same purposes (e.g. the combination of lincomycin and spectinomycin in the above-mentioned US Patent 3,261,687), thus representing a valuable improvement in the breeding of animals.

It has been unexpectedly found that the above aim can be achieved by a combination of the antibiotics gentamicin and lincomycin, preferably in the form of their acid addition salts, e. g. a combination of gentamicin sulfate and lincomycin hydrochioride, which is added to normal animal feed or drinking water.

We have found that good prophylactic and therapeutic effects and, consequently, the greatest final body weight in breeding animals such as poultry are achieved by drinking water or normal feed containing a combination of gentamicin with lincomycin. The combination of gentamicin sulfate with lincomycin hydrochloride is the preferred one.

In a comparison with the use of a known mixture of the antibiotics spectinomycin and lincomycin (Linco-Spectin 100, The Upjohn Comp., USA) in animal feed or drinking water and with the use of individual antibiotics in animal breeding, the new combination of antibiotics of the present invention has, in addition to a greater gain in body weight and a lower death rate, also the highest efficiency factor. The improved results shown by the tests with the new combination of antibiotics in comparison with the known combination of lincomycin and spectinomycin were really surprising and, moreover, because already a small portion of gentamicin in combination with lincomycin is sufficient to obtain improved results. The obtained results are also important from the economic point of view because at fattening animals using the new combination of the antibiotics, a greater gain in body weight, a lower death rate and a higher efficiency factor at a simultaneous lower consumption of both antibiotics are achieved.

The improved results are obtained by using the new combination of antibiotics at fattening animals such as calves, pigs, lambs and poultry (chickens, ducks, geese, turkeys). The antibiotics are added to the usual animal feed or drinking water in the ratio of 1 part by weight of gentamicin and 5 to 60 parts by weight of lincomycin, preferably in the form of acid addition salts thereof.

The dose of the new combination of antibiotics in the feed or drinking water is determined with regard to the kind of animals, age, weight and average daily amount of the used feed and/or drinking water.

The combination of the antibiotics can be used in the form of the pure components or, preferably, a liquid or solid premix, i.e. in concentrated form is prepared before adding to the feed or drinking water. The solid premix can be prepared by mixing the antibiotics with solid diluents such as lactose, starch, meal or soya meal, calcium carbonate etc., which are added to the feed or dispersed in drinking water.

The usual animal feed can also contain additives such as iodized salt, vitamins A, B, C and D, minerals and other suitable salts, preservatives...

The new combination of antibiotics acts synergistically in the prophylaxis and therapy at infections of the animals by microparasites including bacteria, coccidia and mycoplasma, particularly against individual bacteria.

The invention is illustrated by the following examples:

**Example 1**

Comparative testing of the antibiotics gentamicin, a combination of lincomycin and gentamicin, a combination of lincomycin and spectinomycin and amoxicillin in broilers

The comparative testing of the said antibiotics was carried out in broilers and in order to establish the gain in body weight, the growth rate and the efficiency factor. The antibiotics were administered in the form of commercial preparations of gentamicin powder (LEK, Ljubljana, Slovenia) with a 10% content of gentamicin, lincomycin-spectinomycin (Linco-Spectin 100, Upjohn Comp., USA) and amoxicillin (Simivet, Pliva, Croatia). The combination of antibiotics of the present invention lincomycin-gentamicin was administered in the form of a premix with lactose and powdery polyethylene glycol 400.

The used concentrations of antibiotics indicated in Table 1 are calculated as to the portion of the individual antibiotics in the preparation/premix. In the assay there were included 69600 chickens of ARBOR-ACRES provenance, hatched from the eggs of one group of parents at the same period of time. They were put into four henhouses (C1, C2, C3 and C4) with 17400 chickens per building.

For the first three days as well as on the 13th, 14th, and 15th day of their life, the animals were getting a certain antibiotic in drinking water, which is evident from Table 1.

TABLE 1

| Building | Antibiotic | Age (days) | Dose (g/100 l of drinking water) |
|---|---|---|---|
| C1 | gentamicin sulfate | 1,2,3 | 0.5 |
| C2 | gentamicin sulfate+ lincomycin hydrochloride | 1,2,3 | 0.5 18.0 |
| C3 | lincomycin hydrochloride+ spectinomycin sulfate | 1,2,3 | 16.6 33.35 |

3

TABLE 1 (continued)

| Building | Antibiotic | Age (days) | Dose (g/100 l of drinking water) |
|---|---|---|---|
| C4 | amoxicillin trihydrate | 1,2,3 | 2.5 |

On the 13th, 14th, and 15th day of their age, the chickens were getting the same concentration of antibiotics except in the building C4 where the concentration of amoxicillin trihydrate was increased to 5 g per 100 l of drinking water.

The buildings in which the test animals were settled had been disinfected by the following activities: mechanical cleaning, washing with cold water, washing with hot water (80 °C), pouring with 0.5% Izosan solution (LEK, Ljubljana), and gasing with 10% water solution of formaldehyde. Thus disinfected buildings were closed for 14 days. The efficiency of disinfection was controled by microbiological analysis of smears taken - $10^3$ (Koch's method of the decimal dilution, i.e. dilution 1000). As litter sunflower scales were used in a thickness of 8 to 10 cm. The litter was disinfected with a 2% water solution of blue vitriol before settling the chickens. The buildings were heated with gas heaters and aerated with ventilators, the temperature was controlled with thermostats. The temperature for broilers suggested by the AA (Arbor-Acres) standard was as follows:

| Week of age | Temperature(°C) |
|---|---|
| 1 | 32-35 |
| 2 | 29-32 |
| 3 | 26-29 |
| 4 | 23-26 |
| 5 | 21-23 |
| 6 | 21 |
| 7 | 21 |

According to the AA standard, the daily quantity of water used (litres per 100 broilers) with regard to different temperatures and age was as follows:

| Age in weeks | Quantity of used water in litres per 100 animals at the temperature of 21 °C |
|---|---|
| 1 | 30 |
| 2 | 60 |
| 3 | 91 |
| 4 | 121 |
| 5 | 155 |
| 6 | 185 |

The composition of feed was based on the AA standards:

|  | Starter 0-23 days | Finisher 24-38 days | Finisher - final 38-42 days (slaughter) |
|---|---|---|---|
| Total proteins % | 23.0 | 20.5 | 18.5 |
| Total fats % | 5-7 | 5-7 | 5-7 |
| Ca % | 0.90-1.00 | 0.95-1.00 | 0.80-0.95 |
| P % | 0.45-0.50 | 0.41-0.50 | 0.38-0.45 |
| NaCl % | 0.30-0.50 | 0.30-0.50 | 0.30-0.50 |
| CS (coccidiostatic) | + | + | - |

The weekly weight according to the AA* standard for broilers is as follows:

| Week | g |
|---|---|
| 1 | 149 |
| 2 | 371 |
| 3 | 674 |
| 4 | 1040 |
| 5 | 1458 |
| 6 | 1900 |

The weight of chickens were monitored by weighing on the 1st, 14th, 21th, 28th, 35th day and at the slaughter (42th day).

The number of animals and the weights of one-day old chickens by groups are evident from Table 2.

TABLE 2

| Building | Number of chickens | Weight in grams |
|---|---|---|
| C1 | 17 400 | 43 |
| C2 | 17 400 | 37 |
| C3 | 17 400 | 40 |
| C4 | 17 400 | 41 |

It is evident from Table 2 that at the beginning of testing the heaviest chickens came from the building C1, followed by chickens from the buildings C4 and C3, and the lightest were the chickens in the building C2. The difference between the highest and the lowest weight amounted to 6 g.

The state of health of chickens by groups was monitored by clinical pathoanatomical and bacteriological examinations. A sample of internal organs of five animals was taken for bacteriological examination once a week.

The animals were vaccinated on the 14th day of their age against atypical fowl pest (application to water).

* AA (Arbor Acres) standard is named after the company AAF Inc., Glastonbury, Connecticut, the greatest American poultry breeder.

Test Results

The results of weighing the chickens on the first day of their age ad in further weeks of breeding are shown in Table 3.

TABLE 3

| Building | Body weight DSP (g) | Body weight 1st week (N=149g) | Body weight 2nd week (N=371g) | Body weight 3th week (N=674g) |
|---|---|---|---|---|
| C1 | 43 | 141 | 361 | 666 |
| C2 | 37 | 139 | 373 | 682 |
| C3 | 40 | 144 | 362 | 666 |
| C4 | 41 | 137 | 352 | 655 |
| Building | Body weight 4th week (N=1040g) | Body weight 5th week (N=1458g) | Body weight 6th week | |
| C1 | 1040 | 1466 | 1840 | |
| C2 | 1114 | 1490 | 1870 | |
| C3 | 996 | 1432 | 1850 | |
| C4 | 986 | 1457 | 1770 | |

N = the AA standard for the body weight at a defined period of time
DSP = one-day old chickens

The weekly gain in body weight of chickens by groups is shown in Table 3A.

TABLE 3A

| Building | Weight DSP 1st day (g) | Gain in b. w. 1st week (g) | Gain in b. w. 2nd week (g) | Gain in b. w. 3th week (g) |
|---|---|---|---|---|
| C1 | 43 | 98 | 220 | 305 |
| C2 | 37 | 102 | 234 | 309 |
| C3 | 40 | 104 | 218 | 304 |
| C4 | 41 | 96 | 215 | 303 |
| Building | Gain in b. w. 4th week (g) | Gain in b. w. 5th week (g) | Gain in b. w. 6th week (g) | |
| C1 | 374 | 426 | 374 | |
| C2 | 432 | 376 | 380 | |
| C3 | 430 | 436 | 418 | |
| C4 | 331 | 471 | 313 | |

From both Tables 3 and 3A it is evident that in the first week chickens of no experimental group reached the body weight standards. The chickens in the building C3 reached the highest body weight and in the building C4 the lowest weight.

In the second week, the chickens from the building C2 had the greatest body weight and they exceeded the standard for 2 grams. In other buildings the chickens did not reach the standards of the gain in body weight. The chickens from the buildings C1 and C3 reached approximately the same weight and they were about 10g under the standard. The chickens from the building C4 had the lowest weight and lagged behind the standard for 19g.

In third week the chickens from the building C2 had the greatest weight and they also were the only ones reaching and exceeding the standard for 8g. The chickens from the building C1 and C3 reached exactly the same weight in the same period of time, namely 8g under the standard. The chickens in the building C4 still had the lowest weight (19g under the standard).

In the fourth week the chickens in the building C1 reached the body weight according to the AA standard and the chickens from the building C2 exceeded it for 74g. The chickens from the building C3 were under the standard for 44g and those from the building C4 were under the AA standard for 54g.

In the fifth week the results of weighing in the building C2 again exceeded the AA standard for 32g, in the building C1 only for 8g, and the body weight in the buildings C3 and C4 did not reach the AA standard. The greatest final body weight, which was also the most interesting economic result, was reached by the chickens from the building C2 although they had the lowest body weight when settled. Concerning the data on the body weight at slaughter, they were followed by the buildings C3 and C1, while the building C4 diferred from C2 for 100g.

The results of the conversion of the feed are indicated in the Table 4 (the conversion means how much feed is required for the gain in the body weight of 1 kg).

TABLE 4

| Building | kg |
|---|---|
| C1 | 1.96 |
| C2 | 1.96 |
| C3 | 1.94 |
| C4 | 2.05 |

At chicken breeding the conversion is a very important factor. It is evident from the above Table that the chickens from the building C3 used smallest amount of feed (1.94kg) for 1kg of the gain in body weight, those from C1 and C2 used 0.02g more, and those from C4 used 0.11g more feed.

The data on the weekly death rate of the chickens by groups are shown in Table 5.

TABLE 5

| Age (weeks) | Death rate C1 (%) | Death rate C2 (%) | Death rate C3 (%) | Death rate C4 (%) |
|---|---|---|---|---|
| 1 | 1.85 | 0.56 | 0.44 | 0.60 |
| 2 | 0.63 | 0.52 | 0.40 | 0.60 |
| 3 | 0.59 | 0.69 | 0.95 | 0.81 |
| 4 | 0.93 | 0.79 | 1.85 | 0.69 |
| 5 | 0.99 | 0.77 | 1.12 | 0.71 |
| 6 | 1.21 | 1.30 | 1.24 | 1.93 |
| Total | 6.21 | 4.63 | 5.99 | 5.34 |

It is evident from the Table that in the second and in the third week the death rate was quite the same in all buildings. So were the clinical and the pathological results. The chickens mainly died due to the apoplexy and ascites but also due to cachexia. Towards the end of the third week, some chickens were observed in the C3 building with the disease of swollen heads, which led to a slightly higher death rate (the chicken does not see, it cannot reach the feed and water, it dies).

In the fourth week the building C3 had a noticeably higher death rate. As it was mentioned before, the chickens with swollen heads were observed towards the end of the third week and their number as well as the death rate were strongly increased. Another problem in this building was cachexia. In other buildings ascites and cachexia were the main problems.

In the sixth week there was a general rise of the death rate, especially in the building C4 where the classic form of the CRD (Cronic Respiratory Disease) appeared in addition to ascites and cachexia. In the building C3 the occurrence of swollen head cases calmed down but ascites and cachexia were the main problem and some CRD cases occurred as well. In the C1 and C2 buildings cachexia and some CRD cases appeared.

The efficiency factor of the breeding (I)

A comparison of the data on the collective death rate, the final body weight and the conversion by individual groups is given in Table 6.

TABLE 6

|  | C1 | C2 | C3 | C4 |
|---|---|---|---|---|
| Total death rate (%) | 6.21 | 4.63 | 5.99 | 5.34 |
| Final body weight (kg) | 1.84 | 1.87 | 1.85 | 1.77 |
| Conversion | 1.96 | 1.96 | 1.94 | 2.05 |
| Efficiency factor | 1.992 | 2.098 | 2.007 | 1.844 |

In the Table 6 three indicators of the efficiency of each breeding (death rate, body weight, conversion) are evident. However, just by the examination thereof it is possible to get a wrong picture of the breeding efficiency. Therefore the efficiency factor is computed to tell exactly which breeding is the most efficient. From Table 6 it is evident that the building C2 exhibits the highest efficiency factor, followed by the buildings C3, C1 and C4.

The quantities of the obtained meat, the consumption of feed and the quantities of meat lost due to deaths are given in Table 7 (calculated upon 1000 animals).

Feed = weight x conversion
Meat = 71% of the broilers

TABLE 7

|  | C1 | C2 | C3 | C4 |
|---|---|---|---|---|
| Quantity of meat obtained (kg) | 1306 | 1327 | 1313 | 1256 |
| Consumption of feed (kg) | 3600 | 3660 | 3580 | 3628 |
| Quantity of meat lost due to deaths (kg) | 80 | 61 | 77 | 66 |

It is evident from the above Table that by the gain in body weight the consumption of feed is increased as well. The only exception is the building C4 with a high consumption of feed despite the low weight.

*Conclusion*

The total death rate was the lowest in the group receiving the combination of antibiotics of the present invention, i.e. lincomycin-gentamicin (building C2) and amounted to 4.63%, followed by amoxicillin trihydrate (building C4) amounting 5.43%, the combination lincomycin-spectinomycin (building C3) amounting to 5.99% and gentamicin (building C1) amounting to 6.21%.

The final body weight was the greatest in the group receiving the combination lincomycin-gentamicin (building C2) and was 1.87kg, followed by the combination lincomycin-spectinomycin (building C3) amounting to 1.85kg, gentamicin (building C1) amounting to 1.84kg and then amoxicillin trihydrate (building C4) amounting to 1.77kg, which appreciably differed from the other three groups.

The efficiency factor was the highest in the group receiving the combination of antibiotics lincomycin-gentamicin (building C2), followed by the building C3 and then C1 and C4.

The conversion was the lowest in the group treated by the combination of antibiotics lincomycin-spectinomycin (building C3) and amounted to 1.94kg of feed for 1kg of the gain in body weight, in the group treated by the combination of antibiotics lincomycin-gentamicin the value of the conversion was 1.96 as it was in the group treated with gentamicin. The group treated by the antibiotic amoxicillin consumed the highest quantity of feed (2.05) for one kg of the of the gain in body weight.

**Example 2**

Preparation for treating and fattening animals

| lincomycin hydrochloride | 360g |
|---|---|
| gentamicin sulfate | 10g |
| polyethyleneglycol 4000 powder | 40g |
| lactose | 590g |
| | 1.000g |

The preparation was prepared by mixing microgranulated solid components in a mixer and could then be added to drinking water or to animal feed.

**Claims**

1. Additive to animal feed or to animal's drinking water, characterized in that it contains an antibiotic combination of gentamicin and lincomycin or of pharmacologically acceptable acid addition salts thereof.

2. Additive according to claim 1, characterized in that it contains 1 part by weight of gentamicin sulfate and 5 to 60 parts by weight of lincomycin hydrochloride as the antibiotic combination.

3. Additive according to claim 1 or 2 for use in poultry breeding.

4. Animal feed containing the additive according to anyone of claims 1 to 3.

5. Additive according to anyone of claims 1 to 3 or animal feed according to claim 4, for the use in the prophylaxis and the therapy of infections and, consequently, for the gain in body weight and to improve the efficiency factor in fattening animals.

**Patentansprüche**

1. Zusatz zu Tierfutter oder -trinkwasser, dadurch gekennzeichnet, daß er eine Antibiotikumskombination von Gentamicin und Lincomycin oder von pharmakologisch annehmbaren Säureadditionsalzen davon enthält.

2. Zusatz nach Anspruch 1, dadurch gekennzeichnet, daß er 1 Gewichtsteil von Gentamicinsulfat und 5 bis 60 Gewichtsteile von Lincomycinhydrochlorid als die Antibiotikumskombination enthält.

3. Zusatz nach Anspruch 1 oder 2 zur Verwendung in Geflügelzucht.

4. Tierfutter, dadurch gekennzeichnet, daß es den Zusatz nach einem der Ansprüche 1 bis 3 enthält.

5. Zusatz nach einem der Ansprüche 1 bis 3 oder Tierfutter nach Anspruch 4 zur Verwendung in der Prophylaxe und Therapie von Infektionen und folglich zur Körpergewichtszunahme und zur Steigerung des Effizienzfaktors bei Masttieren.

**Revendications**

1. Additif pour aliments pour animaux ou pour l'eau de boisson d'animaux, caractérisé en ce qu'il contient une combinaison antibiotique de gentamicine et de lincomycine ou de sels d'addition d'acides pharmacologiquement acceptables de celle-ci.

2. Additif suivant la revendication 1, caractérisé en ce qu'il contient 1 partie en poids de sulfate de gentamicine et 5 à 60 parties en poids de chlorhydrate de lincomycine à titre de combinaison antibiotique.

3. Additif suivant la revendication 1 ou 2, à utiliser pour l'élevage de la volaille.

4. Aliment pour animaux contenant l'additif suivant l'une quelconque des revendications 1 à 3.

5. Additif suivant l'une quelconque des revendications 1 à 3 ou aliment pour animaux suivant la revendication 4, à utiliser pour la prophylaxie et la thérapie d'infections et, en conséquence, pour assurer le gain de poids corporel et pour améliorer le facteur d'efficience d'animaux en cours d'engraissement.